# EUROPÄISCHE PATENTSCHRIFT

(11) **EP 3 906 131 B1**
(45) Veröffentlichungstag und Bekanntmachung des Hinweises auf die Patenterteilung: **22.11.2023**
(21) Anmeldenummer: 20706978.2
(22) Anmeldetag: 13.02.2020
(51) Int. Cl.: B23K 1/00

(54) **ZWEILAGIGE ABRASIVE SCHICHT FÜR LAUFSCHAUFELSPITZE, VERFAHREN, BAUTEIL UND TURBINENANORDNUNG**
TWO-LAYER ABRASIVE LAYER FOR BLADE TIP, PROCESS, COMPONENT AND TURBINE ARRANGEMENT
COUCHE ABRASIVE À DEUX COUCHES POUR LA POINTE DE LA LAME, COMPOSANT DE TRAITEMENT ET AGENCEMENT DE TURBINE

(30) Priorität: 05.03.2019 DE 102019202926
(43) Veröffentlichungstag der Anmeldung: 10.11.2021
(73) Patentinhaber: Siemens Energy Global GmbH & Co. KG, 81739 München (DE)
(72) Erfinder: SCHUMANN, Eckart, 13503 Berlin (DE); STÖHR, Britta, 14059 Berlin (DE); FLORES RENTERIA, Arturo, 12161 Berlin (DE); LADRU, Francis, 13587 Berlin (DE); SCHULZ, Thorsten, 13595 Berlin (DE); WOLLNIK, Adrian, 14624 Dallgow-Döberitz (DE)
(86) Internationale Anmeldenummer: PCT/EP2020/053731
(87) Internationale Veröffentlichungsnummer: WO 2020/177999

(56) Entgegenhaltungen:
- EP-A1- 1 967 313
- EP-A1- 2 860 231
- DE-A1-102015 203 579
- US-A1- 2004 091 627
- US-A1- 2012 063 911
- US-A1- 2016 003 066

## Beschreibung

Die Erfindung betrifft die Aufbringung einer zweilagigen abrasiven Schicht mittels verschiedener Materialien, ein Bauteil und eine Turbinenanordnung dazu.

Laufschaufelspitzen als beispielhaftes Bauteil sind während des Einschleifvorgangs beim ersten Anfahren der Turbine extremen abrasiven Belastungen ausgesetzt. Dies führt dazu, dass die Beschichtung auf der Laufschaufelspitze bereits nach sehr kurzer Zeit abgetragen wird und die Schaufeln keinerlei Oxidations- oder Korrosionsschutz mehr haben. Entsprechend ausgeprägt sind die oxidations- bzw. auch korrosionsbedingten Schädigungen, die zu einem unerwünscht großen Spalt zwischen den Laufschaufeln und dem Gehäuse führen. Eine Möglichkeit zur Verbesserung stellt das Aufbringen von verschleißbeständigen Beschichtungen auf der Schaufelspitze (tip) in Kombination mit einer abradierbaren (abradable) Beschichtung der Ringsegmente dar, das dann so ausgelegt ist, dass es sich beim Anfahren der Turbine gut abträgt. Dieser Aufbau würde ein kontrolliertes Einschleifen der Laufschaufeln in eine zumindest teilweise vorhandene Statorbeschichtung ermöglichen. Allerdings wurde bislang keine verschleißbeständige Beschichtung für die "tip" entwickelt.

Schaufeln wurden auch oft am Tip mit einem Standardschichtsystem aus MCrAlY und TBC versehen, welches sich jedoch aufgrund der oben beschriebenen Vorgänge nicht lange auf der Schaufel halten kann. Die US 2004/091627 A1 offenbart ein Verfahren zur Herstellung einer abrasiven Beschichtung, wobei das Matrixmaterial entweder NiCrAlY oder CoCrAlY ist

Die US 10,030,527 B2 offenbart die Verwendung von drei Schichten, wobei in der äußersten Schicht aus einem Lotmaterial ebenfalls abrasive Partikel vorhanden sind.

Es ist daher Aufgabe der Erfindung oben genanntes Problem zu lösen.

Die Aufgabe wird gelöst durch ein Verfahren gemäß Anspruch 1 ein Bauteil gemäß Anspruch 2 und eine Turbinenanordnung gemäß Anspruch 13.

In den jeweiligen Unteransprüchen sind weitere vorteilhafte Maßnahmen aufgelistet, die beliebig miteinander kombiniert werden können, um weitere Vorteile zu erzielen.

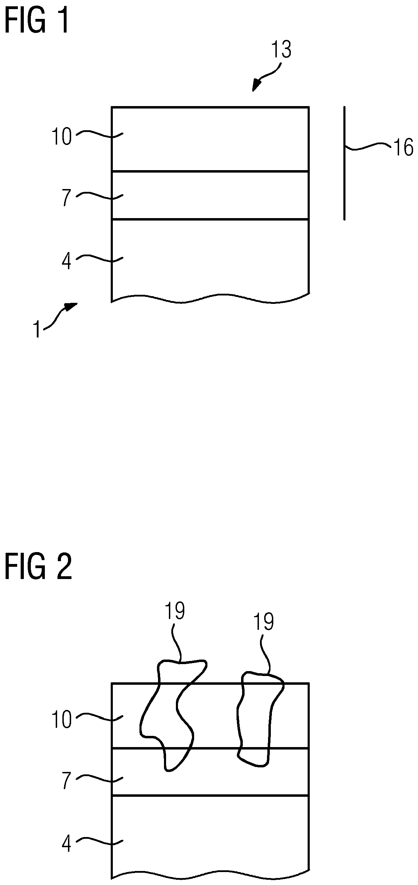

Es zeigt die Figur 1 schematisch die Anordnung auf einer Schaufelspitze und Figur 2 die Anordnung der abrasiven Partikel.

Die Beschreibung und die Figur stellen nur Ausführungsbeispiele der Erfindung dar.

Es wird vorgeschlagen Lagen in Form von Schichten, insbesondere Tapes mit Partikeln aus cBN (cubic Boron Nitride, kubisches Bornitrid), konturnah insbesondere auf Laufschaufeln zu applizieren.

Idealerweise bestehen diese Tapes aus zwei Lagen: einer äußeren MCrAlY-Schicht mit eingebetteten abrasiven Partikeln, insbesondere cBN-Partikeln, versintert mit einer Lotschicht zur Anbindung an ein Substrat.

Bei der Applikation dieser Tapes tritt allerdings das Problem der Fertigungsreihenfolge auf. Werden die Tapes auf die bereits beschichteten Schaufeln aufgelötet, kann es während des Lötens bei Temperaturen oberhalb von 1473K zu einer Beeinträchtigung der Beschichtungen kommen (Aluminium-Eindiffusion in den Grundwerkstoff, Vergröberung der β-Phase, Kirkendal-Porosität, etc.). Dies führt zu einer verschlechterten Oxidationsschutzwirkung und ggf. zu einem Abplatzen der NiCoCrAlY. Daher sollte das cBN-Tape vor dem Schichtsystem für das Schaufelblatt aus NiCoCrAlY und TBC (Wärmedämmschicht: Thermal Barrier Coating) aufgebracht werden. Eine Maskierung im Bereich der Tips ist jedoch nur schwer möglich, so dass eine NiCoCrAlY-Schicht von 300µm auf den cBN-Tapes aufgebracht wird. Es wird erwartet, dass sich diese während des Einschleifvorgangs aufgrund der super-plastischen Eigenschaften der NiCoCrAlY bei hohen Temperaturen schnell abträgt und die darunter liegenden cBN-Partikel freigelegt werden.

Allerdings kann auch ein TBC-Overspray auf den "tips" nicht vollständig unterbunden werden. Es ist also wünschenswert, dass die TBC möglichst schlecht auf der NiCoCrAlY haftet, so dass diese nach dem Beschichten auf den cBN-Tapes am Tip wieder möglichst leicht entfernt werden kann. Hierfür wird ein vorheriges Polieren der Tips vorgeschlagen, welches im Gegensatz zu dem ansonsten standardmäßig durchgeführten Aufrauen zu einer schlechten Verklammerung zwischen MCrAlY und TBC führt.

Vorzugsweise reicht es aus, wenn nicht alle, insbesondere mindestens 10% oder mindestens 20% und höchstens 80% der Laufschaufeln ein cBN-Tape erhalten, um für ein kontrolliertes Einschleifen zu sorgen. Der Fertigungsprozess bzw. die - reihenfolge, die ein kombiniertes Aufbringen der Tapes während des Lösungsglühens sowie das Polieren der NiCoCrAlY-Beschichtung im Bereich der "tips" vorsieht, ist ebenfalls vollständig neu.

Weitere generelle Vorteile der cBN-Tapes sind:
- verlängerte Lebensdauer der Laufschaufeln durch weniger Verschleiß am Tip,
- dadurch erhöhte Lebensdauerzeiten.

Die untere Lage besteht aus einer Schicht aus einem Hochtemperaturlot, insbesondere DF-4B, Ni660 oder BRB.

Das Lot hat einen um mindestens 10K, insbesondere mindestens um 20K tieferen Schmelzpunkt als das Material des Substrats und/oder das Material der zweiten, äußeren Schicht.

In die äußere, zweite Schicht, insbesondere einer NiCoCrAlY-Schicht, sind die abrasiven Partikel, insbesondere die cBN-Partikel eingebettet. Das zweilagige Tape kann zusammen mit den cBN-Partikeln konturnah versintert werden und direkt auf die Tips der Laufschaufeln aufgebracht werden.

Die abrasiven Partikel ragen aus der äußeren Schicht vorzugsweise raus, insbesondere wobei sind sie zumindest zu 50% oder der größte Teil in der Matrix vorhanden.

Je nach Grundwerkstoff des Substrats wird das Lot so gewählt, dass das Auflöten der cBN-Tapes zusammen mit dem Lösungsglühen der Schaufel erfolgen kann.

Das gesamte Tape hat eine Dicke im Bereich von 0,1mm - 0,7mm.

Die cBN-Partikel haben vorzugsweise einen Durchmesser im Bereich von 50pm - 200pm.

Die Lotschicht sollte möglichst dünn gewählt werden, so dass die Beeinträchtigung des Grundwerkstoffs durch eine Eindiffusion des Schmelzpunkterniedrigers aus dem Lot (Bor [B] / Silizium [Si]) soweit wie möglich minimiert werden kann.

Durch den zweilagigen Aufbau der Tapes können die abrasiven Partikel, insbesondere die cBN-Partikel, während des Lötens in Position gehalten werden. Weiterhin fungiert die NiCoCrAlY-Schicht als zusätzliche Senke für die Schmelzpunkterniedriger und bietet zusätzlichen Oxidationsschutz.

Der zweilagige Aufbau der cBN-Tapes aus NiCoCrAlYs und typischen Hochtemperaturloten ist ebenfalls vollständig neu. Es wird erwartet, dass durch das Aufpanzern der "tips" eine Steigerung des Wirkungsgrades um 0,4% erzielt werden kann.

Die Figur 1 zeigt schematisch eine Anordnung 1 einer Schaufelspitze 13 eines Substrats 4, insbesondere einer Laufschaufel 4 einer Turbine, insbesondere einer Gasturbine.

Das Substrat 4 ist vorzugweise metallisch und insbesondere eine Nickel- oder Kobaltbasislegierung.

Es kann auch ein Substrat 4 aus CMC sein.

Auf der Schaufelspitze 13 und dem äußeren Ende ist eine Lotschicht 7 als eine Lage vorhanden und als äußerste zweite Schicht 10 als weitere Lage ist eine Lage aus einem metallischen Matrixmaterial, insbesondere einer NiCoCrAlY-Legierung oder einer NiCoCrAlY-Legierung vorhanden, die abrasive Partikel, insbesondere aus kubischem Bornitrid (cBN) aufweist.

Die abrasiven Partikel 19 können in der Lotschicht 7 vorhanden sein oder sind höchstens teilweise in der Lotschicht 7 vorhanden (Fig. 2).

Vor einer weiteren NiCoCrAlY-Beschichtung des Bauteils findet vorzugsweise ein Lösungsglühen des Substrats bei 1477K bis 1516K für insbesondere 1h bis 4h als Lötprozess statt.

Eine Ausheilwärmebehandlung bis >1365K findet vorzugsweise nach dem Lötprozess und vor der NiCoCrAlY-Beschichtung statt, insbesondere für 4h.

Nach der NiCoCrAlY-Beschichtung erfolgt vorzugsweise eine Anbindungswärmebehandlung, die insbesondere bei ≥1350K und ≤1360K für 1h bis 6h stattfindet.

Nach der NiCoCrAlY-Anbindungswärmebehandlung findet vorzugsweise eine weitere zweite Ausheilwärmebehandlung bei ≤ 1145K statt, insbesondere für 24h.

NiCoCrAlY kann auch weitere Elemente wie Rhenium (Re), Silizium (Si), Tantal (Ta) oder Eisen (Fe) aufweisen.

## Patentansprüche

1. Verfahren
zur Herstellung einer abrasiven Beschichtung (16) auf einem Substrat (4),
insbesondere auf einer Schaufelspitze (13) einer Laufschaufel (1),
bei dem zwei Lagen (7, 10) für die abrasive Beschichtung (16),
nämlich
eine untere Lage einer Lotschicht (7) und
eine äußere, zweite Lage einer Schicht (10) mit abrasiven Partikeln (19) auf das Substrat (4),
insbesondere als Tapes,
aufgebracht werden und
dann durch einen Lötprozess die untere Lotschicht (7) mit dem Substrat (4) verbunden wird,
wodurch auch eine Anbindung der äußeren, zweiten Schicht (10) erfolgt,
wobei das Material der unteren Lotschicht (7) einen um mindestens 10K,
insbesondere einen um mindestens 20K,
tieferen Schmelzpunkt aufweist als das Material des Substrats (4), und
ganz insbesondere auch einen um mindestens 10K, insbesondere einen um mindestens 20K,
niedrigeren Schmelzpunkt als das Material der äußeren, zweiten Schicht (10) aufweist,
bei dem die äußere, zweite Schicht (10) mit abrasiven Partikeln (19)
NiCoCrAlY
als Matrixmaterial aufweist.

2. Bauteil
mit einer abrasiven Beschichtung (16) auf einem Substrat (4),
insbesondere auf einem Substrat (4) aus einer Nickel- oder Kobalt-basierten Superlegierung,
bei dem auf dem Substrat (4) eine untere Lotschicht (7) vorhanden ist,
und eine äußere, zweite Schicht (10) mit abrasiven Partikeln (19),
wobei das Material der Lotschicht (7) einen um mindestens 10K,
insbesondere einen um mindestens 20K,
tieferen Schmelzpunkt aufweist als das Material des Substrats (4), und
insbesondere auch einen um mindestens 10K,
insbesondere einen um 20K niedrigeren Schmelzpunkt als das Material der äußeren zweiten Schicht (10) aufweist,
bei dem die äußere, zweite Schicht (10) mit abrasiven Partikeln (19)
NiCoCrAlY als Matrixmaterial aufweist.

3. Bauteil nach Anspruch 2,
bei dem die abrasiven Partikel (19) in der äußeren, zweiten Schicht (10) und höchstens teilweise in der unteren Lotschicht (7) vorhanden sind.

4. Verfahren nach Anspruch 1,
bei dem zuerst die abrasive Beschichtung (16) aufgebracht und gelötet wird,
dann die restliche Fläche des Bauteils (1),
insbesondere ein Schaufelblatt und/oder eine Schaufelplattform,
mit einer metallischen Schutzschicht,
insbesondere einer NiCoCrAlY basierten Legierung, beschichtet wird.

5. Verfahren nach einem oder mehreren der Ansprüche 1 oder 4, bei dem die Lötung der unteren Lotschicht (7) während eines Lösungsglühens des Substrats (4) erfolgt.

6. Verfahren nach einem oder mehreren der Ansprüche 1, 4 oder 5, bei dem das Lösungsglühen des Substrats (4) bei 1477K bis 1516K und insbesondere für 1h bis 4h stattfindet.

7. Verfahren nach Anspruch 6,
bei dem nach dem Lötprozess und vor einer NiCoCrAlY-Beschichtung eine erste Ausheilwärmebehandlung bis ≥1365K stattfindet,
insbesondere für 4h.

8. Verfahren nach Anspruch 7,
bei dem nach der NiCoCrAlY-Beschichtung eine Anbindungswärmebehandlung erfolgt,
insbesondere bei ≥1350K und ≤1360K insbesondere für 1h bis 6h stattfindet.

9. Verfahren nach Anspruch 8,
bei dem nach der NiCoCrAlY-Anbindungswärmebehandlung eine zweite Ausheilwärmebehandlung bei ≤1145K stattfindet, insbesondere für 24h.

10. Verfahren oder Bauteil nach einem oder mehreren der Ansprüche 1, 2, 3, 4, 5, 6, 7, 8 oder 9,
bei dem das gesamte Tape eine Dicke im Bereich von 0,1mm bis 0,7mm hat.

11. Verfahren oder Bauteil nach einem oder mehreren der Ansprüche 1, 2, 3, 4, 5, 6, 7, 8, 9 oder 10,
bei dem die abrasiven Partikel (19),
insbesondere die cBN-Partikel (19),
einen Durchmesser im Bereich von 50pm bis 200pm aufweisen.

12. Bauteil nach einem oder mehreren der Ansprüche 2, 3 oder 11,
bei dem die abrasiven Partikel (19) aus der äußeren, zweiten Schicht (10) herausragen,
insbesondere zu höchstens 50%.

13. Turbinenanordnung,
die zumindest eine Laufschaufelreihe mit Laufschaufeln aufweist,
wobei an der Schaufelspitze der Laufschaufeln das Bauteil gemäß einem oder mehreren der Ansprüche 2,3,10,11,12 ausgebildet ist.

14. Turbinenanordnung nach Anspruch 13,
bei dem nur ein Teil der Laufschaufeln (1) einer Laufschaufelreihe eine abrasive Beschichtung (16) aufweist.

## Claims

1. Process for producing an abrasive coating (16) on a substrate (4),
in particular on a blade tip (13) of a rotor blade (1), wherein two layers (7, 10) for the abrasive coating (16), namely
a bottom layer of a solder layer (7) and
an outer, second layer of a coating (10) comprising abrasive particles (19),
are applied, in particular as tapes, to the substrate (4), and
the bottom solder layer (7) is then joined to the substrate (4) by a soldering process,
as a result of which the outer, second layer (10) is also bonded-on,
where the material of the bottom solder layer (7) has a melting point which is at least 10K lower,
in particular at least 20K lower,
than that of the material of the substrate (4), and
very particularly also has a melting point which is at least 10K lower,
in particular at least 20K lower,
than that of the material of the outer, second layer (10),
wherein the outer, second layer (10) comprising abrasive particles (19)
comprises NiCoCrAlY
as matrix material.

2. Component comprising an abrasive coating (16) on a substrate (4),
in particular on a substrate (6) composed of a nickel- or cobalt-based superalloy,
wherein a bottom solder layer (7) is present on the substrate (4),
and an outer, second layer (10) comprising abrasive particles (19),
where the material of the solder layer (7) has a melting point which is at least 10K lower,
in particular at least 20K lower,
than that of the material of the substrate (4), and in particular also has a melting point which is at least 10K lower,
in particular 20K lower, than that of the material of the outer, second layer (10),
wherein the outer, second layer (10) comprising abrasive particles (19)
comprises
NiCoCrAlY as matrix material.

3. Component according to Claim 2,
wherein the abrasive particles (19) are present in the outer, second layer (10) and at most partly in the bottom solder layer (7).

4. Process according to Claim 1,
wherein the abrasive coating (16) is firstly applied and soldered,
then the remaining area of the component (1),
in particular a blade airfoil and/or a blade platform, is coated with a metallic protective layer,
in particular an NiCoCrAlY-based alloy.

5. Process according to one or more of Claims 1 to 4,
wherein the soldering of the bottom solder layer (7) occurs during a solution heat treatment of the substrate (4) .

6. Process according to one or more of Claims 1, 4 and 5,
wherein the solution heat treatment of the substrate (4) takes place at from 1477K to 1516K and in particular for from 1 hour to 4 hours.

7. Process according to Claim 6,
wherein a first annealing heat treatment up to ≥1365K, in particular for 4 hours,
takes place after the soldering process and before coating with NiCoCrAlY.

8. Process according to Claim 7,
wherein a bonding heat treatment, in particular at from ≥1350K to ≤1360K, in particular for from 1 hour to 6 hours,
takes place after coating with NiCoCrAlY.

9. Process according to Claim 8,
wherein a second annealing heat treatment at ≤1145K, in particular for 24 hours,
takes place after the NiCoCrAlY bonding heat treatment.

10. Process or component according to one or more of Claims 1, 2, 3, 4, 5, 6, 7, 8 or 9,
wherein the total tape has a thickness in the range from 0.1 mm to 0.7 mm.

11. Process or component according to one or more of Claims 1, 2, 3, 4, 5, 6, 7, 8, 9 or 10,
wherein the abrasive particles (19),
in particular the cBN particles (19),
have a diameter in the range from 50 um to 200 µm.

12. Component according to one or more of Claims 2, 3 or 11, wherein the abrasive particles (19) project from the outer, second layer (10),
in particular to an extent of not more than 50%.

13. Turbine assembly
which comprises at least one rotor blade row having rotor blades,
wherein the component according to one or more of Claims 2, 3, 10, 11, 12 is formed at the blade tip of the rotor blades.

14. Turbine assembly according to Claim 13,
wherein only part of the rotor blades (1) of a rotor blade row has an abrasive coating (16).

## Revendications

1. Procédé de production d'un revêtement (16) abrasif sur un substrat (4),
en particulier sur la pointe (13) d'une aube (1) mobile,
dans lequel on dépose deux strates (7, 10) pour le revêtement (16) abrasif,
à savoir
une strate inférieure d'une couche (7) de brasure et
une deuxième strate extérieure d'une couche (10) ayant des particules (19) abrasives sur le substrat (4),
notamment en cordon,
et ensuite
on relie la couche (7) inférieure de brasure au substrat (4) par une opération de brasure,
grâce à quoi il se produit également une liaison de la deuxième couche (10) extérieure,
dans lequel le matériau de la couche (7) inférieure de brasure a un point de fusion plus bas d'au moins 10K,
en particulier d'au moins 20K,
que le matériau du substrat (4), et
d'une manière tout à fait particulière, a un point de fusion plus bas que le matériau de la deuxième couche (10) extérieure, également d'au moins 10 K,
en particulier d'au moins 20K,
dans lequel la deuxième couche (10) extérieure ayant des particules (19) abrasives a du NiCoCrAlY
comme matériau de matrice.

2. Pièce
comprenant un revêtement (16) abrasif sur un substrat (4), en particulier sur un substrat (4) en super alliage à base de nickel ou de cobalt,
dans laquelle il y a sur le substrat (4) une couche (7) inférieure de brasure
et une deuxième couche (10) extérieure ayant des particules (19) abrasives,
dans laquelle le matériau de la couche (7) de brasure a un point de fusion plus bas d'au moins 10K, en particulier d'au moins 20K,
que le matériau du substrat (4), et
un point de fusion plus bas,
en particulier également d'au moins 10K,
en particulier d'au moins 20K, que le matériau de la deuxième couche (10) extérieure,
dans laquelle la deuxième couche (10) extérieure ayant des particules (19) abrasives
a du NiCoCrAlY comme matériau de matrice.

3. Pièce suivant la revendication 2,
dans laquelle les particules (19) abrasives sont présentes dans la deuxième couche (10) extérieure et au plus en partie dans la couche (7) inférieure de brasure.

4. Procédé suivant la revendication 1,
dans lequel on dépose et on brase d'abord le revêtement (16) abrasif,
puis on revêt la surface restante de la pièce (1), en particulier une lame d'aube et/ou plateforme d'aube, d'une couche métallique de protection,
en particulier d'un alliage à base de NiCoCrAlY.

5. Procédé suivant l'une ou plusieurs des revendications 1 ou 4,
dans lequel la brasure de la couche (7) inférieure de brasure s'effectue pendant un traitement thermique de mise en solution du substrat (4).

6. Procédé suivant l'une ou plusieurs des revendications 1, 4 ou 5,
dans lequel le traitement thermique de mise en solution du substrat (4) a lieu de 1477K à 1516K, et en particulier pendant 1h à 4h.

7. Procédé suivant la revendication 6,
dans lequel après l'opération de brasure et avant un revêtement de NiCoCrAlY, a lieu un premier traitement thermique curatif, jusqu'à ≥ 1365K,
en particulier pendant 4h.

8. Procédé suivant la revendication 7,
dans lequel après le revêtement en NiCoCrAlY, a lieu un traitement thermique de liaison, en particulier à ≥ 1350K et < 1360K, en particulier pendant 1h à 6h.

9. Procédé suivant la revendication 8,
dans lequel après le traitement thermique de liaison du NiCoCrAlY, a lieu un deuxième traitement thermique curatif à ≤ 1145K,
en particulier pendant 24h.

10. Procédé ou pièce suivant l'une ou plusieurs des revendications 1, 2, 3, 4, 5, 6, 7, 8 ou 9,
dans lequel le tape total a une épaisseur dans la plage de 0,1mm à 0,7mm.

11. Procédé ou pièce suivant l'une ou plusieurs des revendications 1, 2, 3, 4, 5, 6, 7, 8, 9 ou 10,
dans lequel les particules (19) abrasives,
en particulier les particules (19) cBN, ont un diamètre dans la plage de 50um à 200 um.

12. Pièce suivant l'une ou plusieurs des revendications 2, 3 ou 11,
dans laquelle les particules (19) abrasives font saillie à l'extérieur de la deuxième couche (10),
en particulier de 50 % au plus.

13. Agencement de turbine,
qui a au moins une rangée d'aubes mobiles,
dans lequel, sur la pointe des aubes mobiles, la pièce est constituée suivant l'une ou plusieurs des revendications 2, 3, 10, 11, 12.

14. Agencement de turbine suivant la revendication 13,
dans lequel seulement une partie des aubes (1) mobiles d'une rangée d'aubes a un revêtement (16) abrasif.
